# FASCICULE DE BREVET EUROPEEN

(11) **EP 1 646 437 B1**
(45) Date de publication et mention de la délivrance du brevet: **27.12.2006**
(21) Numéro de dépôt: 04767498.1
(22) Date de dépôt: 28.06.2004
(51) Int. Cl.: B01D 15/08, B01D 11/04

(54) **PROCEDE ET DISPOSITIF DE SEPARATION DES CONSTITUANTS D'UNE CHARGE LIQUIDE PAR CHROMATOGRAPHIE LIQUIDE-LIQUIDE CENTRIFUGE**
VERFAHREN UND VORRICHTUNG ZUR TRENNUNG VON BESTANDTEILEN EINER FLÜSSIGEN BESCHICKUNG MITTELS FLÜSSIGKEIT-FLÜSSIGKEIT-ZENTRIFUGENCHROMATOGRAPHIE
METHOD AND DEVICE FOR SEPARATING CONSTITUENTS OF A LIQUID CHARGE BY MEANS OF LIQUID-LIQUID CENTRIFUGE CHROMATOGRAPHY

(30) Priorité: 02.07.2003 FR 0308076
(43) Date de publication de la demande: 19.04.2006
(73) Titulaire: Institut Français du Pétrole, 92852 Rueil Malmaison Cédex (FR); Couillard, François, 56860 Séné (FR)
(72) Inventeur: COUILLARD, François, 56860 Séné (FR); FOUCAULT, Alain, 44600 Saint-Nazaire (FR); DURAND, Daniel, 92500 Rueil-Malmaison (FR)
(86) Numéro de dépôt international: PCT/FR2004/001653
(87) Numéro de publication internationale: WO 2005/011835

(56) Documents cités:
- DE-A- 3 130 967
- FR-A- 2 417 340
- US-A- 4 857 187
- US-A- 4 900 435
- DEN HOLLANDER J L ET AL: "Centrifugal partition chromatographic reaction for the production of chiral amino acids" JOURNAL OF CHROMATOGRAPHY B: BIOMEDICAL SCIENCES & APPLICATIONS, ELSEVIER SCIENCE PUBLISHERS, NL, vol. 711, no. 1-2, 26 juin 1998 (1998-06-26), pages 223-235, XP004129439 ISSN: 1570-0232

## Description

La présente invention concerne un procédé de séparation des constituants d'une charge liquide par chromatographie liquide-liquide centrifuge et un dispositif de mise en oeuvre.

### ETAT DE LA TECHNIQUE

Une technique connue de séparation des constituants d'un mélange, dite à lit mobile simulé (abréviation LMS) ou contre-courant simulé (SMB) consiste à faire passer le mélange dans un ensemble de colonnes disposées en série comprenant chacune des lits remplis d'adsorbant. Au moyen d'un ensemble complexe de pompes, de conduits et de vannes, on établit au travers des lits une circulation de fluides permettant l'injection d'une charge dont on cherche à séparer au moins un des composants et d'un éluant qui contient principalement le désorbant, ou le soutirage d'un extrait qui contient principalement le composant préférentiellement adsorbé ou d'un raffinat qui se compose principalement des éléments les moins préférentiellement adsorbés. Un tel système est décrit par exemple dans le brevet FR 2 762 793.

Il n'est pas possible dans un SMB de faire circuler la phase solide. On le simule par un jeu compliqué de vannes et de pompes, commandés selon des algorithmes compliqués. Le remplacement périodique des phases solides dans les colonnes est extrêmement coûteux et nécessite un arrêt relativement long de la production. Ce type de système est difficile à maîtriser en raison de sa complexité. Sa maintenance est lourde.

Une autre technique connue de séparation de constituants A et B en solution dans un mélange liquide consiste à l'injecter dans une "colonne chromatographique" soumise à une force centrifuge, qui est conçue pour que l'une des phases liquides puisse être percolée dans l'autre phase liquide et réciproquement (chromatographie dite à CCC ou CPC).

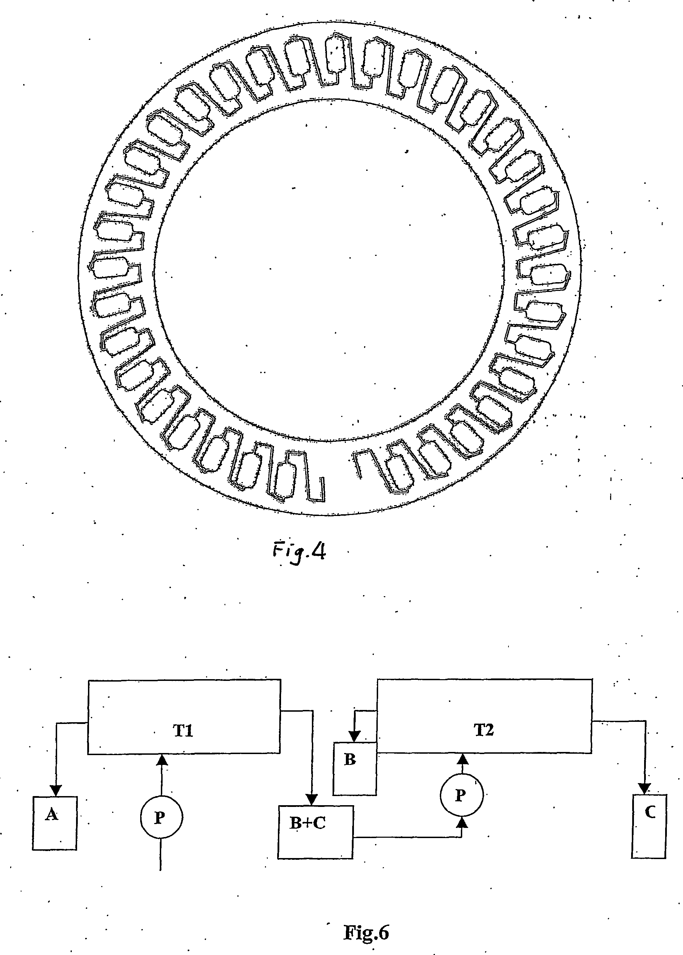

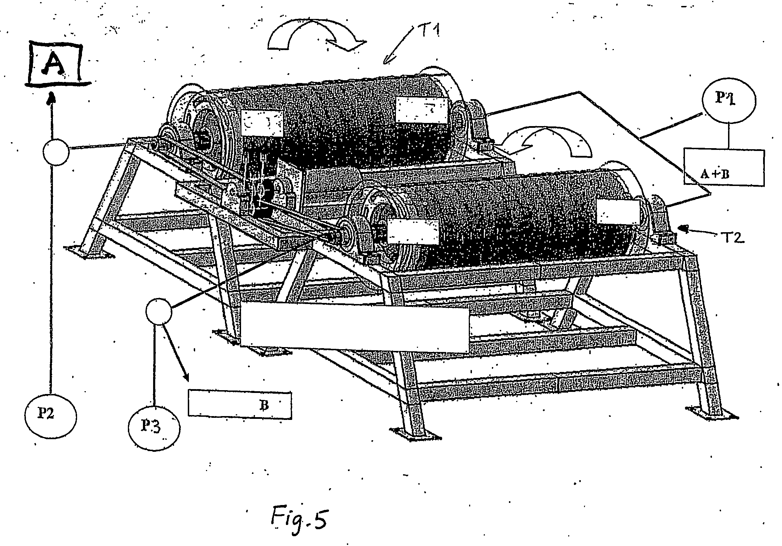

Dans la pratique, comme le montrent notamment les brevets FR 2.791.578, US 4.551.251 US 4 877 523 ou US 4.857.187, ce type de système comprend un ou plusieurs empilements de disques D entraînés en rotation (cf. Fig.4). Chacun d'eux comporte dans son épaisseur et sur toute sa périphérie une succession de cellules CE disposées suivant une direction radiale ou oblique et mises en série par un ensemble des circuits de fines canalisations tortueuses L aux extrémités de chaque cellule. Les circuits de tous les disques communiquent les uns avec les autres. Les cellules et leurs circuits de communication sont remplis d'une phase liquide stationnaire maintenue en place par la force centrifuge et une autre phase liquide mobile qui percole la phase stationnaire.

### LE PROCEDE ET LE DISPOSITIF DE SEPARATION SELON L'INVENTION

Le procédé selon l'invention permet la séparation des constituants d'une charge en solution liquide d'au moins deux constituants de coefficients de partage différents tels qu'ils sont entraînés à des vitesses inégales respectivement par un solvant léger et un solvant plus lourd, dans un dispositif comprenant au moins une colonne de chromatographie liquide-liquide centrifuge constituée par l'interconnexion en série d'au moins une chaîne de cellules de séparation.

Le procédé se distingue essentiellement en ce qu'il comporte :
- l'injection de la charge en un point intermédiaire de la chaîne de cellules ; et
- la réalisation de cycles alternés de deux phases, avec une première phase durant un premier intervalle de temps où l'on injecte du solvant plus léger par une première extrémité du dispositif et on recueille un premier composant à une deuxième extrémité du dispositif, et une deuxième phase durant un deuxième intervalle de temps où l'on injecte du solvant plus lourd par la deuxième extrémité du dispositif et on recueille un deuxième constituant à la première extrémité.

De préférence, on ajuste les durées respectives de la première et de la deuxième phase et/ou les débits d'injection du solvant plus léger et du solvant plus lourd en fonction des constituants du mélange, de manière à obtenir une séparation optimale.

Suivant un mode de mise en oeuvre, on réalise plusieurs séparations en cascade pour isoler les uns des autres les divers constituants d'un mélange de plus de deux constituants.

Ce mode s'applique par exemple à la séparation de deux isomères optiques avec injection dans un premier dispositif d'une charge comprenant les isomères optiques et un sélecteur chiral pour obtenir un premier des isomères d'une part et un mélange du deuxième isomère et du sélecteur chiral et avec ensuite injection de ce mélange issu du premier dispositif dans un deuxième dispositif adapté à séparer le deuxième isomère et le sélecteur chiral.

Le dispositif selon l'invention permet la séparation des constituants d'une charge en solution liquide d'au moins deux constituants de coefficients de partage différents tels qu'ils sont entraînés à des vitesses inégales respectivement par un solvant plus léger et un solvant plus lourd. Il comprend au moins une colonne de chromatographie liquide-liquide centrifuge constituée par l'interconnexion en série d'au moins une chaîne de cellules de séparation. Chaque colonne est associée à une première pompe d'injection de la charge en un point intermédiaire de la chaîne de cellules, une première vanne connectant une première extrémité de la colonne à un premier récipient pour recueillir un premier des constituants (FA) ou à une deuxième pompe d'injection d'un premier des solvants (L),une deuxième vanne (V2) connectant une deuxième extrémité de la colonne à un deuxième récipient pour recueillir un deuxième des constituants (FB) ou à une troisième pompe (P3) d'injection d'un deuxième des solvants (1), des moyens de commutation alternée des vannes (V1, V2) de façon à passer alternativement d'une première phase avec une injection du premier des solvants (L) et la réception du deuxième constituant séparé (FB), à une d'une deuxième phase avec une injection du deuxième des solvants (1) et la réception du premier constituant séparé (FA), et des moyens pour commander le débit des pompes.

Suivant un mode de réalisation, le dispositif comporte par exemple au moins deux colonnes de séparation en cascade pour séparer les constituants d'un mélange comprenant au moins trois constituants différents.

Le dispositif se prête aussi bien à des injections de la charge en continu, qu'à des injections discontinues de la charge.

### PRESENTATION SUCCINCTE DES FIGURES

Les caractéristiques et avantages de la méthode et du dispositif selon l'invention, apparaîtront plus clairement à la lecture de la description ci-après d'un exemple non limitatif de réalisation, en se référant aux dessins annexés où :
- la figure 1 montre schématiquement dans une première phase de fonctionnement cyclique, une unité de séparation avec colonne de séparation et moyens de circulation associés où le mélange à séparer est injecté en un point intermédiaire en application du procédé selon l'invention ;
- la figure 2 montre schématiquement la même unité dans une deuxième phase de fonctionnement cyclique ;
- la Fig.3 illustre à titre d'exemple, la séparation progressive en fonction du temps des éléments d'un mélange injecté à un instant donné dans une unité de séparation de 200 cellules, sous l'action des phases cycliques schématisées aux figures 1, 2 ;
- la figure 4 montre un exemple de colonne (ou fraction de colonne de séparation) sous la forme d'un disque soumis à centrifugation comprenant sur tout son pourtour, des cellules radiales interconnectées en série au travers desquelles circulent les constituants à séparer et les solvants ;
- la figure 5 montre un exemple d'agencement de deux ensembles de séparation multi-disques qui sont soumis à centrifugation et interconnectés en série, avec injection du mélange dans le circuit intermédiaire qui les réunit ; et
- la figure 6 montre schématiquement la connexion en cascade d'ensembles de séparation permettant dans certains cas la séparation de mélange comprenant plus de deux constituants.

### DESCRIPTION DETAILLEE

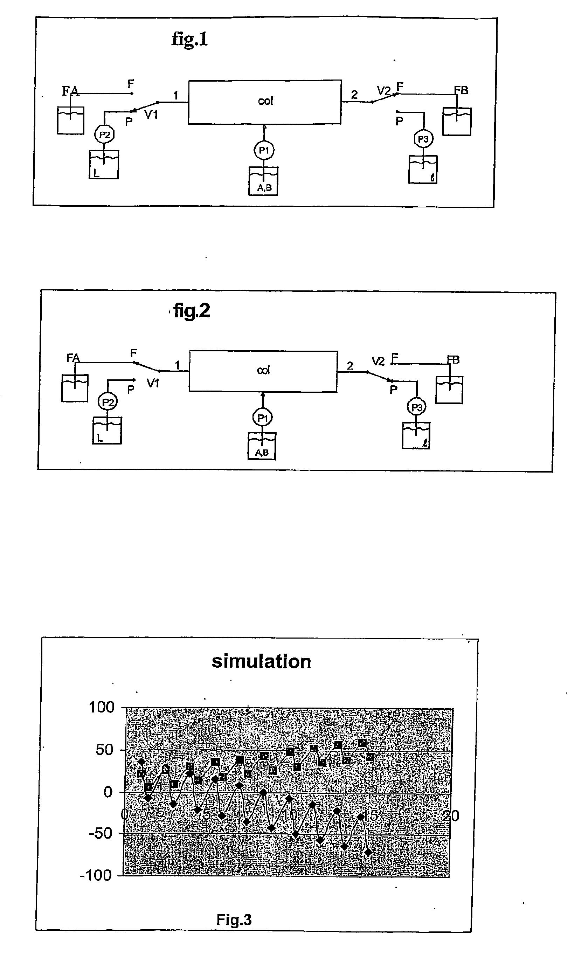

Le système comporte essentiellement (Fig.1, 2) au moins une colonne de chromatographie liquide-liquide centrifuge (Col) soumise à centrifugation conçue pour séparer un mélange (A, B) en ses deux composants A et B. En un point intermédiaire de la colonne, une pompe P1 injecte le mélange liquide (A, B) à séparer de façon continue ou discontinue.

À une première extrémité E1, la colonne est connectée via une première vanne V1, soit à un premier récipient de collecte FA du premier constituant A, soit à une entrée communiquant par une pompe d'injection P2 avec un récipient contenant un solvant lourd L. À son extrémité opposée E2, la colonne est connectée via une deuxième vanne V2 soit avec une sortie communiquant avec un autre récipient FB de collecte du constituant B, soit à une entrée communiquant par une pompe d'injection P2 avec un récipient contenant un solvant léger 1.

Dans le mode de fonctionnement illustré aux Fig.1, 2, on considère que les constituants A, B ont des coefficients de partage tels que B est entraîné plus rapidement que A par le solvant lourd L et que A est entraîné plus rapidement que B par le solvant léger (1).

Dans la première phase (Fig.1) de durée t₁, la pompe (P2) pompe pendant un certain temps le solvant lourd (L) qui est alors en situation de "phase mobile", cependant que la phase légère (1) se trouve dans le dispositif en situation de phase stationnaire.

Dans la deuxième phase (Fig.2) de durée t₂, la pompe (P3) pompe pendant un certain temps le solvant léger (1) qui est alors en situation de "phase mobile", cependant que la phase lourde (L) se trouve dans le dispositif en situation de phase stationnaire.

Si l'on injecte en continu l'échantillon (A, B), à l'aide de la pompe P1, et que l'on commute périodiquement les vannes (V1 et V2), passant ainsi alternativement des modes de connexion des figures 1 et 2, on va retrouver A dans le récipient FA et B dans le récipient FB.

Ce phénomène de séparation est illustré sur la Fig.3 où l'on a injecté, à un instant donné et durant un intervalle de temps limité, au milieu d'une colonne de 200 cellules interconnectées par exemple, une petite quantité d'un mélange A, B. On observe le phénomène de séparation avec le composant A (en grisé) se déplaçant vers une extrémité de la colonne et l'autre composant B (en noir) se déplaçant vers l'extrémité opposée. On observe bien sur la Fig. 3 que A et B font à chaque cycle des allers retours dans les cellules, ce qui revient à allonger artificiellement la distance de circulation. Tout se passe donc comme si l'on avait augmenté le nombre de cellules.

On peut jouer sur les durées t₁ et t₂ ainsi que sur les débits de solvants injectés pour obtenir une divergence rapide des constituants vers les extrémités opposées de la colonne (comme illustré à la Fig.3) des parcours de la Fig.3.

Il est bien évident que si l'on injecte le mélange A, B en continu, on récolte aussi les constituants A et B en continu.

Dans le dispositif selon l'invention, le remplissage des deux phases liquides nécessite une dizaine de minutes et, tant que l'on ne change pas le type de production, il n'est nul besoin d'arrêter son fonctionnement.

Les phases liquides sont considérablement moins coûteuses que les phases solides utilisées dans les systèmes de séparation de type 5MB. Pour un même volume de production, on réduit la consommation de phase mobile par un facteur de l'ordre de 10, avec le dispositif décrit.

Dans l'exemple de la Fig.5, le système comporte deux tambours T1, T2 disposés parallèlement constitués chacun d'un empilement de disques tels que celui de la Fig.4 et entraînés en rotation. Ces deux tambours sont connectés en série. On peut les faire tourner dans le même sens ou comme représentés ici en sens contraire l'un de l'autre si cela peut simplifier les circuits d'interconnexion en série. Le mélange est injecté par la pompe P1 en un point intermédiaire sur le conduit qui les raccordent. La pompe P2 est connectée à l'entrée du tambour T1 en mode ascendant (phase mobile la plus légère) et la pompe P3 est connectée à l'entrée du tambour T2 en mode descendant (phase mobile la plus lourde).

Il est bien évident que le point intermédiaire d'injection du mélange dans la colonne peut être choisi où on le juge utile, compte tenu des coefficients de partage effectifs des constituants du mélange.

Le système de séparation à plusieurs unités de la figure 6 permet d'obtenir des séparations en cascade. Si le mélange initial comporte trois composants A, B, C tels que la première unité soit adaptée à séparer A d'une part et B, C d'autre part, on peut, après la première séparation, injecter le mélange restant B, C dans une deuxième unité de séparation, et obtenir une séparation des constituants B et C.

C'est avantageux par exemple dans le cas où l'on cherche à séparer deux isomères optiques. Il est d'usage à cet effet de leur ajouter un sélecteur chiral. Comme le savent les gens de l'art, cela permet d'obtenir séparément aux sorties respectives de la première unité, un premier isomère et le deuxième isomère mélangé au sélecteur chiral. Si l'on injecte le mélange restant du deuxième isomère et du sélecteur chirale dans la deuxième unité de séparation, on peut récupérer ainsi entièrement le sélecteur chirale, ce qui est très avantageux, compte tenu de son coût élevé.

Les deux tableaux ci-après récapitulent les avantages de la méthode selon l'invention (dite CPCPC) le premier, par rapport aux méthodes classiques de chromatographie liquide-liquide centrifuge, le deuxième, par rapport aux systèmes de séparation de type SMB.

| | CPC classique (et CCC) | CPCPC |
|---|---|---|
| Injection | Volume fini de A,B, injecté à une extrémité de la 'colonne chromatographique' | Injection continue de A,B en un point situé entre les extrémités de la 'colonne chromatographique' |
| Elution | Mode ascendant, ou mode descendant, ou mode dual, c'est-à-dire un cycle unique des deux modes | Elution alternative dans les deux modes, avec une fréquence Φ définie par l'opérateur |
| Fractions collectées | Fractions collectées à l'extrémité de la 'colonne chromatographique' opposée à celle de l'injection, ou en mode dual successivement à chaque extrémité, correspondant au cycle unique de modes sélectionné | Fractions collectées aux deux extrémités de la 'colonne chromatographique', de façon alternative avec une fréquence Φ |
| Systèmes biphasiques | Identiques pour les deux techniques | |
| Remplissage de la 'colonne chromatographique' | Généralement phase stationnaire d'abord, puis mise en équilibre avec la phase mobile avant ou après injection | Remplissage simultané avec les deux phases selon un ratio défini par l'opérateur |
| Injection | Volume fini de A,B, injecté à une extrémité de la 'colonne chromatographique' | Injection continue de A,B en un point situé entre les extrémités de la 'colonne chromatographique' |
| Elution | Mode ascendant, ou mode descendant, ou mode dual, c'est-à-dire un cycle unique des deux modes | Elution alternative dans les deux modes, avec une fréquence Φ définie par l'opérateur |
| Fractions collectées | Fractions collectées à l'extrémité de la 'colonne chromatographique' opposée à celle de l'injection, ou en mode dual successivement à chaque extrémité, correspondant au cycle unique de modes sélectionné | Fractions collectées aux deux extrémités de la 'colonne chromatographique', de façon alternative avec une fréquence Φ |
| Systèmes biphasiques | Identiques pour les deux techniques | |
| Remplissage de la 'colonne chromatographique' | Généralement phase stationnaire d'abord, puis mise en équilibre avec la phase mobile avant ou après injection | Remplissage simultané avec les deux phases selon un ratio défini par l'opérateur |

A noter que le système de séparation selon l'invention consomme sensiblement 10 fois moins de solvants que le SMB.

A noter que les injections de la charge en un point intermédiaire de la colonne, peuvent se faire aussi bien de façon continue que discontinue.

## Revendications

1. Procédé de séparation des constituants d'une charge en solution liquide d'au moins deux constituants (A, B) de coefficients de partage différents tels qu'ils sont entraînés à des vitesses inégales respectivement par un solvant léger et un solvant plus lourd, dans un dispositif comprenant au moins une colonne de chromatographie liquide-liquide centrifuge (col) constituée par l'interconnexion en série d'au moins un ensemble de cellules de séparation, (CE) **caractérisé en ce qu'**il comporte :
- l'injection de la charge en un point intermédiaire des dits ensemble de cellules ; et
- la réalisation de cycles alternés de deux phases, avec une première phase durant un premier intervalle de temps (t₁) où l'on injecte du solvant plus léger par une première extrémité du dispositif et on recueille un premier composant à une deuxième extrémité du dispositif, et une deuxième phase durant un deuxième intervalle de temps (t₂) où l'on injecte du solvant plus lourd par la deuxième extrémité du dispositif et on recueille un deuxième constituant à la première extrémité.

2. Procédé selon la revendication 1, dans lequel on ajuste les durées respectives (t₁, t₂) de la première et de la deuxième phase et/ou les débits d'injection du solvant plus léger et du solvant plus lourd en fonction des constituants du mélange, de manière à obtenir une séparation optimale.

3. Procédé selon la revendication 1 ou 2, dans lequel on réalise plusieurs séparations en cascade pour isoler les uns des autres les divers constituants d'un mélange de plus de deux constituants.

4. Procédé selon la revendication 3, dans lequel on sépare des deux isomères optiques en injectant dans un premier dispositif une charge comprenant les isomères optiques et un sélecteur chiral pour obtenir un premier des isomères d'une part et un mélange du deuxième isomère et du sélecteur chiral et en injectant le dit mélange issu du premier dispositif dans un deuxième dispositif adapté à séparer le deuxième isomère et le sélecteur chiral.

5. Procédé selon l'une des revendications précédentes, dans lequel la charge est injectée de façon continue ou discontinue.

6. Dispositif de séparation en continu des constituants d'une charge en solution liquide d'au moins deux constituants (A, B) de coefficients de partage différents tels qu'ils sont entraînés à des vitesses inégales respectivement par un solvant plus léger et un solvant plus lourd, comprenant au moins une colonne de chromatographie liquide-liquide centrifuge (col) constituée par l'interconnexion en série d'au moins une chaîne de cellules de séparation (CE), **caractérisé en ce qu'**à chaque colonne est associé une première pompe (P1) d'injection de la charge en un point intermédiaire de la chaîne de cellules, une première vanne (V1) connectant une première extrémité de la colonne à un premier récipient pour recueillir un premier des constituants (FA) ou à une deuxième pompe (P2) d'injection d'un premier des solvants (L),une deuxième vanne (V2) connectant une deuxième extrémité de la colonne à un deuxième récipient pour recueillir un deuxième des constituants (FB) ou à une troisième pompe (P3) d'injection d'un deuxième des solvants (1), des moyens de commutation alternée des vannes (V1, V2) de façon à passer alternativement d'une première phase avec une injection du premier des solvants (L) et la réception du deuxième constituant séparé (FB), à une d'une deuxième phase avec une injection du deuxième des solvants (1) et la réception du premier constituant séparé (FA), et des moyens pour commander le débit des pompes.

7. Dispositif selon la revendication 6, comprenant au moins deux colonnes de séparation en cascade pour séparer les constituants d'un mélange comprenant au moins trois constituants différents.

## Claims

1. A method for separating the constituents of a liquid solution feed having at least two constituents (A, B) with different partition coefficients such that they are driven at unequal speeds by a light solvent and a heavier solvent respectively, in a device including at least one centrifugal liquid-liquid chromatographic column (col) constituted by the serial interconnection of at least one set of separation cells, (CE) **characterised in that** it comprises:
- injecting the feed at an intermediate point of said set of cells; and
- carrying out alternate cycles of two phases with a first phase lasting a first time interval (t₁) in which lighter solvent is injected through a first end of the device and a first component is collected at a second end of the device, and a second phase lasting a second time interval (t₂) in which heavier solvent is injected through the second end of the device and a second component is collected at the first end.

2. The method according to Claim 1, in which the respective durations (t₁, t₂) of the first and second phases and/or the injection flow rates of the lighter solvent and of the heavier solvent are adjusted depending on the constituents of the mixture, so as to obtain an optimum separation.

3. The method according to Claim 1 or 2, in which several cascade separations are carried out in order to isolate from one another the various constituents of a mixture which has more than two constituents.

4. The method according to Claim 3, in which two optical isomers are separated by injecting, into a first device, a feed including the optical isomers and a chiral selector in order to obtain a first one of the isomers, on the one hand, and a mixture of the second isomer and the chiral selector, and by injecting the said mixture from the first device into a second device which is adapted to separate the second isomer and the chiral selector.

5. The method according to one of the preceding claims, in which the feed is injected in a continuous or non-continuous manner.

6. A device for the continuous separation of the constituents of a liquid solution feed having at least two constituents (A, B) with different partition coefficients such that they are carried at unequal speeds by a lighter solvent and a heavier solvent respectively, including at least one centrifugal liquid-liquid chromatographic column (col) constituted by the serial interconnection of at least one chain of separation cells (CE), **characterised in that** to each column there is associated a first feed injection pump (P1) at an intermediate point of said chain of cells, a first valve (V1) which connects a first end of the column to a first receptacle for collecting a first one of the constituents (FA) or to a second pump (P2) for injecting a first one of the solvents (L), a second valve (V2) connecting a second end of the column to a second receptacle for collecting a second one of the constituents (FB) or to a third pump (P3) for injecting a second one of the solvents (1), means for alternately switching the valves (V1, V2) so as to alternately pass from a first phase, with an injection of the first one of the solvents (L) and the reception of the second separated constituent (FB), to one of a second phase with an injection of the second one of the solvents (1) and the reception of the first separated constituent (FA), and means for controlling the flow rate of the pumps.

7. The device according to Claim 6, including at least two cascade separation columns to separate the constituents of a mixture including at least three different constituents.

## Patentansprüche

1. Verfahren zur Trennung der Bestandteile einer flüssigen Beschickung aus mindestens zwei Bestandteilen (A, B) mit verschiedenen Verteilungskoeffizienten, so dass sie jeweils mit ungleichen Geschwindigkeiten durch ein leichtes Lösungsmittel und ein schwereres Lösungsmittel mitgerissen werden in eine Vorrichtung, die mindestens eine Flüssig-Flüssig-Zentrifugalchromatographiesäule (col) aufweist, welche durch Serienschaltung von mindestens einer Anzahl von Trennzellen (CE) gebildet wird, **dadurch gekennzeichnet, dass** es die Schritte umfasst:
- Einspritzen der Beschickung an einem intermediären Punkt der Zelleneinheit, und
- Ausführen von abwechselnden Zweiphasenzyklen mit einer ersten Phase während einem ersten Zeitintervall (t₁), wobei leichteres Lösungsmittel über ein erstes Ende der Vorrichtung eingespritzt und eine erste Komponente an einem zweiten Ende der Vorrichtung erhalten wird, und einer zweiten Phase während eines zweites Zeitintervalls (t₂), wobei schwereres Lösungsmittel über das zweite Ende der Vorrichtung eingespritzt und ein zweiter Bestandteil am ersten Ende erhalten wird.

2. Verfahren nach Anspruch 1, in welchem die jeweiligen Zeitdauern (t₁, t₂) der ersten und der zweiten Phase und/oder die Einspritzmengen des leichteren Lösungsmittels und des schwereren Lösungsmittels in Abhängigkeit von den Bestandteilen des Gemisches derart justiert werden, dass eine optimale Trennung erhalten wird.

3. Verfahren nach Anspruch 1 oder 2, in welchem mehrere Trennungen kaskadenartig ausgeführt werden, um die verschiedenen Bestandteile eines Gemisches von mehr als zwei Bestandteilen zu isolieren.

4. Verfahren nach Anspruch 3, in welchem die zwei optischen Isomere getrennt werden, indem in eine erste Vorrichtung eine Beschickung eingespritzt wird, welche die optischen Isomere und einen chiralen Selektor umfaßt um das erste der Isomere in einem Teil und eine Mischung, des zweiten Isomers und des chiralen Selektors zu erhalten und indem die Mischung aus der ersten Vorrichtung in eine zweite Vorrichtung gespritzt wird, die dazu angelegt ist, das zweite Isomer und den chiralen Selektor zu trennen.

5. Verfahren nach einem der vorhergehenden Ansprüche, in welchem die Beschickung kontinuierlich oder diskontinuierlich eingespritzt wird.

6. Vorrichtung zur kontinuierlichen Trennung der Bestandteile einer flüssigen Beschickung aus mindestens zwei Bestandteilen (A, B) mit verschiedenen Verteilungskoeffizienten, so dass sie mit jeweils ungleichen Geschwindigkeiten durch ein leichteres Lösungsmittel und ein schwereres Lösungsmittel mitgerissen werden, welche mindestens eine Flüssig-Flüssig-Zentrifugalchromatographiesäule (col) aufweist, die durch Serienschaltung von mindestens einer Trennzellenkette (CE) gebildet wird, **dadurch gekennzeichnet, dass** jeder Säule eine erste Pumpe (P1) zugeordnet ist zum Einspritzen der Beschickung an einem intermediären Punkt der Zellenkette, ein erstes Ventil (V1), das ein erstes Ende der Säule mit einem ersten Gefäß verbindet, um einen ersten Bestandteil (FA) aufzunehmen, oder mit einer zweiten Pumpe (P2) zum Einspritzen eines ersten Lösungsmittels (L), ein zweites Ventil (V2), das ein zweites Ende der Säule mit einem zweiten Gefäß verbindet, um einen zweiten Bestandteil (FB) aufzunehmen, oder mit einer dritten Pumpe (P3) zum Einspritzen eines zweiten Lösungsmittels (I), Mittel zum abwechselnden Umschalten der Ventile (V1, V2); um abwechselnd von einer ersten Phase mit einer Einspritzung des ersten Lösungsmittels (L) und der Entgegennahme des zweiten getrennten Bestandteils (FB) auf eine zweite Phase mit einer Einspritzung des zweiten Lösungsmittels (I) und der Entgegennahme des ersten getrennten Bestandteils (FA) zu wechseln und Mittel zum Steuern des Pumpendurchsatzes.

7. Vorrichtung nach Anspruch 6, umfassend mindestens zwei kaskadierte Trennsäulen, um die Bestandteile eines Gemisches mit mindestens drei verschiedenen Bestandteilen zu trennen.
